# EUROPÄISCHE PATENTSCHRIFT

(11) **EP 2 049 395 B1**
(45) Veröffentlichungstag und Bekanntmachung des Hinweises auf die Patenterteilung: **17.10.2012**
(21) Anmeldenummer: 07725523.0
(22) Anmeldetag: 24.05.2007
(51) Int. Cl.: B64D 15/16, F15B 13/042

(54) **STEUERUNGSVORRICHTUNG FÜR DIE SPANN-HEBEEINRICHTUNG EINES FAHRZEUGPLANENOBERTEILES**
CONTROL DEVICE FOR THE TENSIONING AND LIFTING MECHANISM OF AN UPPER PART OF A VEHICLE TARPAULIN
DISPOSITIF DE COMMANDE POUR LE SYSTÈME DE TENSION ET DE LEVAGE DE LA PARTIE SUPÈRIEURE D'UNE BÂCHE DE VÉHICULE

(30) Priorität: 24.05.2006 AT 417062006
(43) Veröffentlichungstag der Anmeldung: 22.04.2009
(73) Patentinhaber: Bauregger, Günter, 4702 Wallern (AT)
(72) Erfinder: Bauregger, Günter, 4702 Wallern (AT)
(74) Vertreter: Dupal, Helmut
(86) Internationale Anmeldenummer: PCT/EP2007/004626
(87) Internationale Veröffentlichungsnummer: WO 2007/134866

(56) Entgegenhaltungen:
- EP-A- 0 551 928
- WO-A-01/56796
- US-A- 3 704 720
- US-A- 5 160 102

## Beschreibung

Die Erfindung betrifft eine Steuerungsvorrichtung für die Spann-Hebeeinrichtung nach dem Oberbegriff des Anspruches 1.

Steuerungsvorrichtungen sind von dem Anmelder bekannt geworden und in ähnlicher Form aus dem Stand der Technik bekannt.

Nachteilig ist bei großen Fahrzeugen das erhebliche Volumen der in den aufgeblasenen Schläuchen einer Spann-Hebeinrichtung enthaltenen Luft, für deren Entweichen eine länger Zeitspanne notwendig ist und die bei verbleibenden Restmengen die Aufbauhöhe eines Fahrzeuges unzulässig erhöhen kann.

Abhilfe kann durch Absaugen der in den Schläuchen befindlichen Luft geschaffen werden, doch sind die bisher bekannt gewordenen Lösungen unpraktisch oder unhandlich oder können in den Bremskreislauf eines Fahrzeuges eingreifen.

Aufgabe der Erfindung ist es, eine bekannte Steuerungsvorrichtung für eine Spann-Hebeeinrichtung eines Fahrzeugplanenoberteiles eines Fahrzeuges zu schaffen, mit der es möglich ist, die erwähnten Nachteile zu vermeiden und eine zuverlässige übersichtlich aufgebaute Steuerung für die Füllung und die vollständige Entleerung herzustellen.

Diese Aufgabe wird bei einer Steuerungsvorrichtung nach dem Oberbegriff des Anspruches 1 mit den Merkmalen des kennzeichnenden Teiles des Anspruches 1 gelöst.

Die Unteransprüche, die gleichzeitig einen Teil der Beschreibung der Erfindung bilden, betreffen besonders vorteilhafte Ausgestaltungen der Erfindung.

Durch die Anwendung eines Ejektors, der mit einem Druck betrieben wird, der mit einem Regler auf knapp unterhalb des Druckes der Druckluftanlage eines Fahrzeuges, etwa eines LKW's eingestellt ist und dadurch über eine zuverlässig hohe Saugleistung verfügt, kann eine rasche und vollständige Absaugung der Füllluft aus der Spann-Hebeeinrichtung erzielt werden.

So ist die Herabsetzung des Betriebsdruckes für den Ejektor mit einem Nebendruckregler von 8 bis 13,5 bar auf 5,5 bar für die Funktion günstig.

Für die Füllung der Schläuche der Spann-Hebeeinrichtung ist die Herabsetzung des Druckes der Druckluftanlage mit einem Hauptdruckregler auf 0,15 bis 0,2 bar für alle Größen geeignet.

Zur Vornahme der Steuerung ist die Einschaltung eines 5/3-Wegeventils in die Ausgangsleitung des Nebendruckreglers von Vorteil, weil mit dessen Schaltung auf ein druckgesteuertes 3/2-Wegeventil die Steuerung des Durchganges der Druckluft eines Hauptdruckreglers mit niedrigem Druck, zur Füllung der Schläuche der Spann-Hebeeinrichtung, erfolgen kann und bei Sperrung und Druckentlastung durch Verbindung dieser Steuerleitung mit der Außenluft, das Ventil auf die Verbindung der Zuleitung zur Spann-Hebeeinrichtung auf den Ejektor schaltet und damit die Ableitung der Füllluft an die Außenluft herstellt.

Die Steuerung des 3/2-Wegeventils mit einer Steuerleitung über das 5/3-Wegeventil (4) mit dem Arbeitsdruck des Nebendruckreglers vereinfacht die Bedienung der Anordnung wesentlich und vermeidet Schaltungsfehler.

Mit der Schaltung des 3/2-Wegeventils in der Weise, dass in der nicht mit dem Arbeitsdruck des Nebendruckreglers beaufschlagten Stellung die Zuleitung zur Spann-Hebeeinrichtung mit dem Ejektor (6) verbindet stellt die Verbindung der Schläuche der Spann-Hebeeinrichtung mit der Außenluft bei Fehlen des Arbeitsdruckes des Nebendruckreglers sicher.

Für die Montage und die Überprüfung ist es von Vorteil, wenn die Eingangsleitung von der Druckluftanlage eines Fahrzeuges zum Hauptdruckregler über einen Eingangskupplungsstecker und die Zuleitung vom 3/2-Wegeventil an die Spann-Hebeeinrichtung über einen Steckschlauchanschluß lösbar verbunden sind.

Für die weitere Vereinfachung der Bedienung kann die Steuerungsvorrichtung mit einer Fernsteuerungsvorrichtung versehen sein, die das 5/3-Wegeventil und falls erforderlich den Kompressor der Druckluftanlage des Fahrzeuges steuert.

In einer vereinfachten Gestaltung kann das 5/3-Wegeventil mit einem Gestänge oder einer Zugeinrichtung mechanisch schaltbar eingerichtet sein.

Für die Herstellung und Aufrechterhaltung eines aufgeblasenen oder entleerten Zustandes der Luftschläuche und für den Schutz der Luftschläuche und der Plane kann ein zentraler Schutzschalter auf die Fernsteuerungsvorrichtung elektrisch wirkend und mit Sensoren für die Füllung gekoppelt, vorgesehen sein.

Die Erfindung wird an Hand der Schaltungszeichnungen einer bekannten Ausführungsform und der mit der Neuerung versehenen Steuerungsvorrichtung beschrieben.

Es zeigt:
- Fig.1: eine Schaltungszeichnung einer Steuerungsvorrichtung für eine Spann-Hebeeinrichtung eines Fahrzeugplanenoberteiles eines Fahrzeugaufbaues, schematisch;
- Fig.2: eine Schaltungszeichnung einer Steuerungsvorrichtung für eine Spann-Hebeeinrichtung eines Fahrzeugplanenoberteiles eines Fahrzeugaufbaues mit einer Zusatzvorrichtung, schematisch;

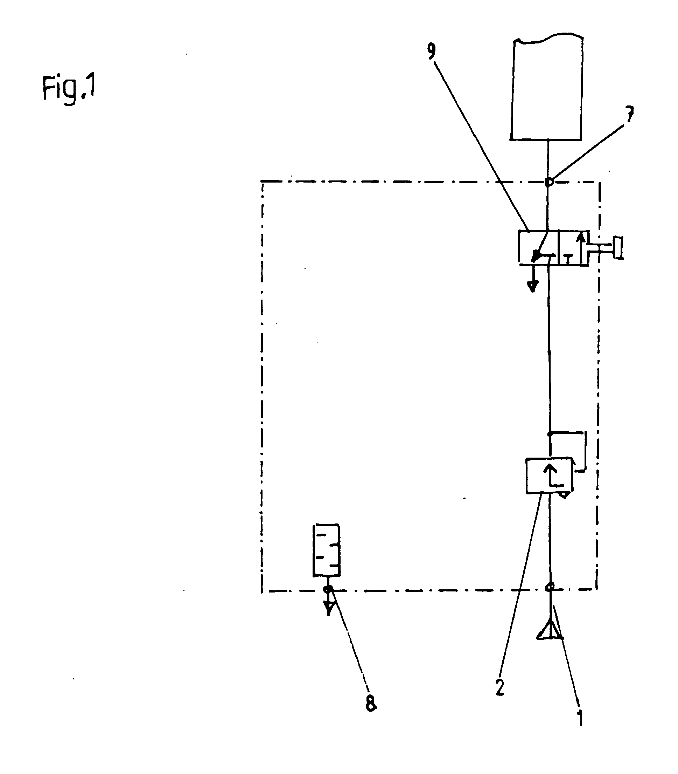

In Fig. 1 ist eine bekannte Steuerungsvorrichtung für die Füllung und die Entleerung von Schläuchen einer Spann-Hebevorrichtung für Fahrzeugplanenoberteile als Schaltbild dargestellt.

Die Steuerungsvorrichtung ist mit der Druckversorgungsanlage eines Fahrzeuges, wie LKW, LKW-Anhänger, Wechselbrücke o.dgl. über einen Eingangskupplungsstecker an die Eingangsleitung 1 gekuppelt ist, die an den Hauptdruckregler 2 führt, der den Druck der Druckversorgungsanlage von 8 bis 13,5 bar auf 0,15 bis 0,2 bar herabsetzt.

Vom Hauptdruckregler 2 wird die Druckluft an ein mechanisch betätigbares 3/2-Wegeventil 9 geleitet, von dem die Druckluft in der gedrückten Durchgangsstellung über eine Zuleitung 7 und einen Steckschlauchanschluß zum Füllen an die Schläuche der Spann-Hebeeinrichtung gelangt.

In der gezogenen Stellung des 3/2-Wegeventils 9 wird die Druckluft abgesperrt und die Zuleitung 7 zum Entleeren der Spann-Hebeeinrichtung mit der Außenluft verbunden.

Zur Entlüftung des Gehäuses der Steuerungsvorrichtung ist ein Entlüftungsschalldämpfer 8 eingesetzt.

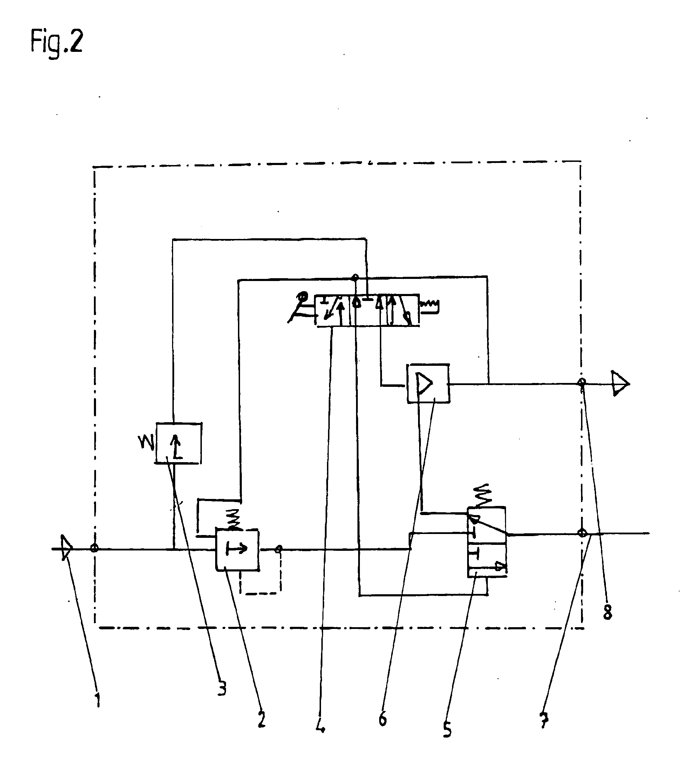

Die Gestaltung einer Steuerungsvorrichtung gemäß der Erfindung ist als Schaltschema in Fig. 2 wiedergegeben.

Die Führung der Eingangsleitung 1 an den Hauptdruckregler 2 und von dort an ein druckluftgesteuertes 3/2-Wegeventil 5, sowie die Zuleitung 7 zu der Spann-Hebeeinrichtung und die Ableitung an die Außenluft entspricht dem Schaltschema in Fig. 1.

Abweichend ist dagegen die Steuerung des 3/2-Wegeventils 5. Vor dem Anschluß der Eingangsleitung 1 an den Hauptdruckregler 2 ist eine Zweigleitung mit der Druckluft der Druckversorgungsanlage an einen Nebendruckregler 3 geführt der den Druck der Arbeitsluft auf 5,5 bar herabsetzt, die dann einem mechanisch betätigten 5/3-Wegeventil 4 zugeleitet wird.

In einer Mittelstellung ist die Arbeitsluft abgesperrt und die Steuerleitung des druckgesteuerten 3/2-Wegeventils 5, sowie die Entlüftungsleitung des Hauptdruckreglers 2 an die Außenluft geschaltet, gemeinsam mit der Zuleitung 7 zur Spann-Hebevorrichtung über einen stillgesetzten Ejektor 6, in dessen Ableitung an die Außenluft erstere eingebunden sind.

In der gedrückten Stellung des 5/3-Wegeventils wird die Arbeitsluft mit 5,5 bar an die Steuerseite des 3/2-Wegeventils 5 geleitet und damit die Durchgangsstellung für die Zuleitung 7 zum Füllen der Schläuche der Spann-Hebevorrichtung freigegeben.

In der gezogenen Stellung des 5/3 Wegeventils 4 wird die Steuerleitung des 3/2-Wegeventils 5 entlüftet und dieses in die Entlüftungsstellung für die Zuleitung 7 der Spann-Hebevorrichtung verstellt, die Arbeitsluft in den Ejektor 6 geleitet und die Entlüftung damit verstärkt und vervollständigt.

### Legende

- 1: Eingangsleitung zu einem Hauptdruckregler 2
- 2: Hauptdruckregler für niedrigen Druck
- 3: Nebendruckregler für hohen Druck
- 4: 5/3-Wegeventil
- 5: druckgesteuertes 3/2-Wegeventil
- 6: Ejektor
- 7: Zuleitung zu einer Spann-Hebeeinrichtung
- 8: Entlüftungsschalldämpfer
- 9: 3/2-Wegeventil

## Patentansprüche

1. Steuerungsvorrichtung für eine Spann-Hebeeinrichtung eines Fahrzeugplanenoberteil mit wenigstens einem Luftschlauch, die eine Eingangsleitung (1) für den Anschluß eines Hauptdruckreglers (2) an die Druckluftanlage eines Fahrzeuges, mit insbesonders 8 bis 13,5 bar aufweist, dessen Ausgangsdruckluft, von insbesondere 0,15 bis 0,2 bar, an ein 3/2-Wegeventil (5) geführt ist, das diese mit einer Zuleitung (7) zu der Spann-Hebeeinrichtung verbindet oder die Zuleitung (7) zur Außenluft öffnet, **dadurch gekennzeichnet, dass** vor dem Anschluß des Hauptdruckreglers (2) die Eingangsleitung (1) an einen Nebendruckregler (3), mit fest auf mehrere bar, insbesondere auf 5,5 bar, eingestellten Arbeitssdruck, abzweigt, dessen Ausgangsleitung an ein 5/3-Wegeventil (4) geführt ist, über das der Arbeitsdruck an einen Ejektor (6) geleitet wird, über welchen Ejektor (6), die Zuleitung (7) zur Spann-Hebeeinrichtung, für die Abführung der Luft, aus dem wenigstens einen Luftschlauch, über das 3/2-Wegeventil (5) mit der Außenluft verbindbar ist.

2. Steuerungsvorrichtung nach Anspruch 1, **dadurch gekennzeichnet, dass** das 3/2-Wegeventil (5) mit einer Steuerleitung von dem 5/3-Wegeventil (4) mit dem Arbeitsdruck des Nebendruckreglers (3), in die Durchgangsstellung der für die Ausgangsdruckluft des Hauptdruckreglers (2) zur Füllung der Spann-Hebeeinrichtung verstellbar ist.

3. Steuerungsvorrichtung nach Anspruch 2, **dadurch gekennzeichnet, dass** das 3/2-Wegeventil (5) in der Stellung, in der dessen Steuerleitung nicht mit dem Arbeitsdruck des Nebendruckreglers (3) beaufschlagt ist, die Zuleitung (7) Stellung die Zuleitung (7) zur Spann-Hebeeinrichtung mit dem Ejektor (6) verbindet und dass in dieser Stellung des 3/2-Wegeventils (5) die Stellung des 5/3-Wegeventils (4) gleichzeitig die Steuerleitung des 3/2-Wegeventils (5) und den Hauptdruckregler (2) mit der Außenluft verbindet.

4. Steuerungsvorrichtung nach einem der Ansprüche 1 bis 3, **dadurch gekennzeichnet, dass** die Eingangsleitung (1) zum Hauptdruckregler (2) über einen Eingangskupplungsstecker mit der Druckluftanlage eines Fahrzeuges verbindbar ist.

5. Steuerungsvorrichtung nach einem der Ansprüche 1 bis 4, **dadurch gekennzeichnet, dass** die Zuleitung (7) vom 3/2-Wegeventil (5) über einen Steckschlauchanschluß mit der Spann-Hebeeinrichtung verbindbar ist.

## Claims

1. Control device for a tensioning and lifting mechanism of an upper part of a vehicle tarpaulin, with at least one air hose which has an input line (1) for connecting a main pressure regulator (2) to the compressed air system of a vehicle, the system containing, in particular, 8 to 13.5 bar. The compressed air output by the main pressure regulator (2) of, in particular, 0.15 to 0.2 bar is conducted to a 3/2-way directional control valve (5) which connects said air to the outside air by means of a feed line (7) to the tensioning and lifting mechanism or opens the feed line (7) to the outside air, which is **characterized in that** in front of the connection of the main pressure regulator (2), the input line (1) branches off to a secondary pressure regulator (3) which adjusts the working pressure to a number of bar, in particular to 5.5 bar and whose output line is carried via a 5/3-way directional control valve (4) by means of which the working pressure is conducted to an ejector (6). Via this ejector (6) the feed line (7) to the tensioning and lifting mechanism, for the discharge of air from at least one air hose, may be connected to the outside air by means of the 3/2-way directional control valve (5).

2. Control device according to claim 1, which is **characterized in that** the 3/2-way directional control valve (5) with a control line from the 5/3-way directional control valve (4) with the working pressure of the secondary pressure regulator (3) is adjustable in the pass-through position of the compressed air outlet of the main pressure regulator (2) for the filling of the tensioning and lifting mechanism.

3. Control device according to claim 2, which is **characterized in that** the 3/2-way directional control valve (5) in the position in which its control line is not pressurized with the working pressure of the secondary pressure regulator (3), connects the feed line (7) to the tensioning and lifting device by means of the ejector (6) and that in this position of the 3/2-way directional control valve (5) the position of the 5/3-way directional control valve (4) connects at the same time the control line of the 3/2-way directional control valve (5) and the main pressure regulator (2) with the outside air.

4. Control device according to one of claims 1 to 3 which is **characterized in that** the input line (1) to the main pressure regulator may be connected with the compressed air system of a vehicle by means of an inlet coupling plug.

5. Control device according to one of claims 1 to 4 which is **characterized in that** the feed line (7) from the 3/2-way directional control valve may be connected with the tensioning and lifting device by means of a push-in tube connection.

## Revendications

1. Dispositif de commande pour un système de tension et de levage de la partie supérieure d'une bâche de véhicule, comportant au moins un tuyau flexible à air et présentant une conduite d'entrée (1) destinée à raccorder un régulateur de pression principal (2) à l'installation d'air comprimé d'un véhicule, dont la pression va notamment de 8 à 13,5 bars. L'air comprimé à la sortie du régulateur de pression principal (2), allant notamment de 0,15 à 0,2 bar, est dirigé vers une valve triple à double circuit (5) qui relie ledit air comprimé à travers une conduite d'amenée (7) au système de tension et de levage ou ouvre la ligne d'amenée (7) à l'air extérieur, marqué par le fait que devant le régulateur de pression principal (2), la conduite d'entrée (1) dérive vers un régulateur de pression secondaire (3) qui règle la pression de fonctionnement à plusieurs bars, à 5,5 bars notamment, et la conduite de sortie duquel est dirigée à travers une valve quintuple à triple circuit (4) via lequel la pression de fonctionnement est conduit vers un éjecteur (6). A travers cet éjecteur (6) la conduite d'amenée (7) vers le système de tension et de levage pour la purge d'air d'au moins un tuyau flexible à air peut être reliée à l'air extérieur à travers la valve triple à double circuit (5).

2. Dispositif de commande selon l'exigence 1, marqué par le fait que la valve triple à double circuit (5) avec une conduite de pilotage de la valve quintuple à triple circuit (4) avec la pression de fonctionnement du régulateur de pression secondaire (3), dans la position de passage de l'air comprimé à la sortie du régulateur d'air principal (2) est réglable pour le remplissage du système de tension et de levage.

3. Dispositif de commande selon l'exigence 2, marqué par le fait que la valve triple à double circuit (5) dans la position dans laquelle sa conduite de pilotage n'est pas alimentée avec la pression de fonctionnement du régulateur de pression secondaire (3) relie la ligne d'amenée (7) vers le système de tension et de levage avec l'éjecteur (6) et que dans cette position de la valve triple à double circuit (5) la position de la valve quintuple à trois circuit (4) relie en même temps la conduite de pilotage de la valve triple à double circuit (5) et le régulateur de pression principal (2) à l'air extérieur.

4. Dispositif de commande selon une des exigences 1 à 3, marqué par le fait que la ligne d'entrée (1) jusqu'au régulateur de pression principal (2) peut être reliée avec l'installation d'air comprimé d'un véhicule à travers une demi-raccord mâle d'entrée.

5. Dispositif de commande selon une des exigences 1 à 4, marqué par le fait que la ligne d'entrée (7) de la valve triple à double circuit (5) peut être reliée au système de tension et de levage à travers un raccord rapide par emboîtement.
